# EUROPÄISCHE PATENTSCHRIFT

(11) **EP 0 574 603 B1**
(45) Veröffentlichungstag und Bekanntmachung des Hinweises auf die Patenterteilung: **21.08.1996**
(21) Anmeldenummer: 92110115.0
(22) Anmeldetag: 16.06.1992
(51) Int. Cl.: G01B 11/00

(54) **Vorrichtung zur Krümmungsvermessung von Rundholz**
Apparatus for measuring the curvature of round wood
Dispositif pour mesurer la courbure de bois rond

(43) Veröffentlichungstag der Anmeldung: 22.12.1993
(73) Patentinhaber: MASCHINENFABRIK SIMON MÖHRINGER GmbH, D-97353 Wiesentheid (DE)
(72) Erfinder: Möhringer, Fritz, W-8714 Wiesentheid, OT Feurbach (DE)
(74) Vertreter: Hübner, Gerd, Dipl.-Phys.

(56) Entgegenhaltungen:
- DE-A- 3 406 435
- US-A- 4 294 149

## Beschreibung

Die Erfindung betrifft eine Vorrichtung zur berührungslosen Vermessung und zur Krümmungserkennung von Rundholz für eine automatische Rundholzeinteilung nach dem Oberbegriff des Patentanspruches 1.

Um bei der Rundholzeinteilung zu optimalen Lösungen zu kommen, muß das Rundholz, welches bekanntlich sehr unterschiedliche Formen aufweisen kann, so vermessen werden, daß eine elektronische Abbildung im Rechner davon erfolgen kann. Die Erfindung vermißt das Holz berührungslos durch kreuzweise Durchmesser-Erfassung mittels elektronischer Meßvorhänge und dabei wird das Holz der Länge nach über- und unterfahren.

Bei einer bekannten Vorrichtung werden die Rundhölzer auf einen Längsförderer gebracht und durch diesen Längsförderer (Meßkettenzug) an der stationären Meßvorrichtung vorbei bewegt. Diese Vorrichtung bedingt jedoch Förderanlagen in der Größe der doppelten Stammlänge und ist oft aus Platzgründen nicht einzusetzen. Außerdem ist dieses Längsförderverfahren sehr zeitraubend und konstruktiv aufwendig. Darüber hinaus ist durch den Längstransport des zu vermessenden Rundholzes auf dem Längsförderer keine ruhige Lage des Holzes garantierbar. Das bedeutet, daß die Meßgenauigkeit zur Krümmungserkennnung der Rundhölzer dadurch beeinträchtigt wird.

Eine andere bekannte Vorrichtung hebt die Rundhölzer hoch, hält sie dann stationär, um sie danach durch eine Meßeinrichtung zu überfahren. Nachteilig ist bei diesem Verfahren, daß die Hölzer mittig aufgenommen werden und damit ihre Krümmungsrichtung zur Meßeinrichtung beliebig eingenommen werden kann. Damit ist eine Krümmungserkennung bei ungünstiger Lage des Rundholzes nur sehr eingeschränkt möglich.

Aus der DE-A-34 06 435 ist eine gattungsgemäße Vorrichtung zur berührungslosen Vermessung und zur Krümmungserkennung von Rundholz bekannt. Die Vermessung der einzelnen Rundhölzer erfolgt dabei dadurch, daß eine Meßeinrichtung mit zueinander winkelförmig versetzten, in einer Ebene angeordneten Vermessungseinrichtungen entlang des Rundholzes verfahren wird, während letzteres selbst in Ruhe auf einem Meßtisch liegt. Das Rundholz wird dabei horizontal von der Seite durch einen Querförderer auf den Meßtisch transportiert. Dabei ist problematisch, daß das Rundholz bezüglich seiner Krümmung unter Umständen keine definierte Stellung einnimmt.

Davon ausgehend liegt der Erfindung die Aufgabe zugrunde, eine Vorrichtung zur berührungslosen Vermessung und Krümmungserkennung von Rundholz derart zu verbessern, daß das Rundholz vor der Vermessung automatisch in eine Lage übergeführt wird, in der die Krümmungsebene des Rundholzes eine horizontale Lage einnimmt.

Diese Aufgabe wird durch die im Kennzeichnungsteil des Anspruches 1 angegebenen Merkmale gelöst.

Die Erfindung vermeidet die obigen Nachteile dadurch, daß die Hölzer auf einem speziellen Rundholzquerförderer quer zur Längsachse des Rundholzes in den Meßbereich eingefahren werden. Durch die große horizontale Auflagefläche auf dem speziell gestalteten Rundholzquerförderer nehmen die Stämme eine absolut ruhige und von der Krümmung her genau definierte Lage ein, so daß die Krümmung parallel zur Auflagefläche des Holzes zu liegen kommt. Unterstützt wird dies durch die Ausführung dieses gebogenen Rundholzquerförderers, welcher die Hölzer erst nach oben fördert, jedoch auf dem gebogenen Teil die Hölzer - bedingt durch ihr Eigengewicht - in die oben angegebene Lage bringt. Die Erfindung vermeidet somit die bei der zuerst genannten bekannten Vorrichtung durch die Längsförderung notwendige hohe Durchlaufzeit des Rundholzes und erspart die bei der zweiten bekannten Vorrichtung notwendige Zeit für das Hochheben und Absenken des Rundholzes. Die Erfindung vermißt die Rundhölzer dadurch sehr genau, daß das zu vermessende Rundholz absolut ruhig liegenbleibt und der Wagen der Vermessungseinrichtung direkt auf dem Untergestell des Querförderers fährt, so daß keine Relativbewegungen zwischen der Vermessungseinrichtung und dem Rundholz senkrecht zur Rollrichtung des Meßwagens entstehen, die die Meßgenauigkeit der Krümmungserkennung negativ beeinflussen können.

Bei bekannten Meßverfahren läuft der Wagen nämlich über eine frei tragende Brücke von einer Länge, die der größten Stammlänge entspricht, und ist somit Vibrationen ausgesetzt, die durch Windkräfte und Erschütterungen in dem Brückengestell entstehen und auf die Wagenlaufräder übertragen werden und die natürlich der Meßgenauigkeit abträglich sind.

Der Erfindungsgegenstand wird anhand eines Ausführungsbeispiels gemäß den beigefügten Zeichnungen näher erläutert. Es zeigen:
Fig.1 eine Seitenansicht und
Fig.2 eine Draufsicht einer erfindungsgemäßen Vorrichtung.

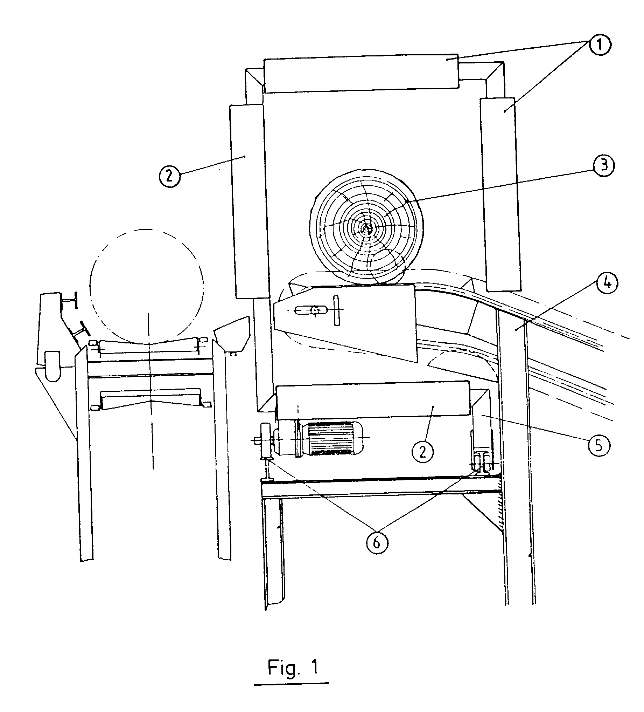

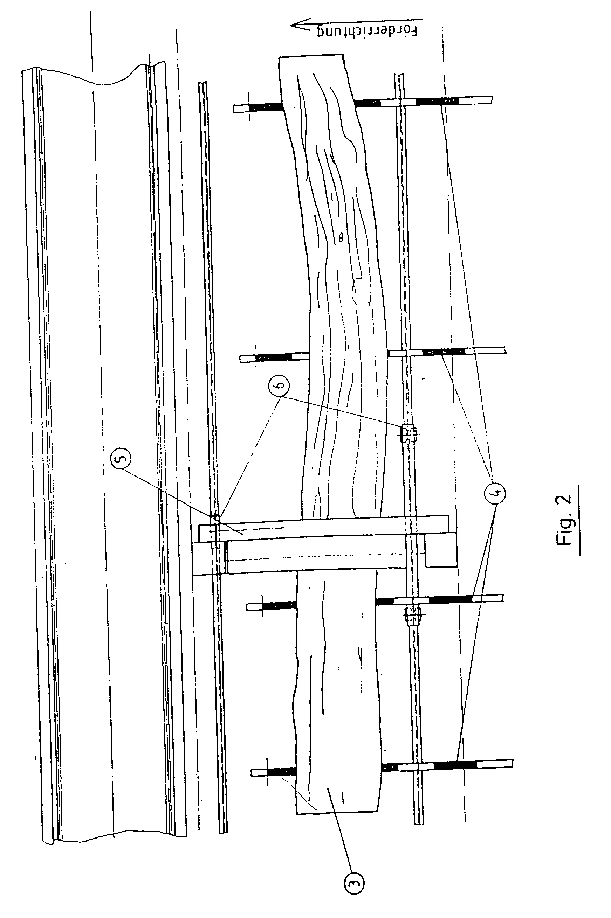

Das Rundholz 3 wird über einen Querförderer 4 in die dargestellte Meßposition gebracht. Bei der Förderung über den gebogenen Teil des Rundholzquerförderers nimmt der gekrümmte Stamm eine Lage ein, in der die Krümmung parallel zur horizontalen Ebene liegt. Die über Kreuz angebrachten Sender 1 und Empfänger 2 des Meßrahmens vermessen nun den Durchmesser und die Lage des Stammes, indem sie zusammen mit den Wagen einmal in Holzrichtung am zu vermessenden Stamm vorbeifahren. Die Schienen 6 sind an der Förderanlage mit angebaut, so daß eine kompakte Konstruktion gegeben ist. Die Einflüsse des Querförderers 4 (siehe Fig.2) , der abschnittsweise einen Schatteneffekt bei der Vermessung bewirkt, werden durch elektronische Ausblendung automatisch korrigiert. Nach der Vermessung kann der Stamm nach links (siehe Fig.1) in den Abtransportförderer rutschen. Weil die Erfindung ein Vermessungsverfahren beinhaltet, welches in einen Rundholzquerförderer eingebaut werden kann, ist nur eine platzsparende und konstruktiv wenig aufwendig Querförderung des Rundholzes notwendig, die ja schon für eine Rundholzaufgabe auch ohne Vermessungseigenschaft gebraucht wird. Eine aufwendige Längsförderung zur Vermessung entfällt ebenso wie eine Rundholzanhebevorrichtung. Durch die Querförderung ist es möglich, bei Stämmen, die nicht vermessen werden sollen, Zeit zu sparen, indem vom Rundholzquerförderer der Stamm direkt ohne anzuhalten auf den Abtransportförderer geschoben wird.

## Patentansprüche

1. Vorrichtung zur berührungslosen Vermessung und Krümmungserkennung von Rundholz für eine automatische Rundholzeinteilung mit einem Querförderer (4) und zwei kreuzweise in einer Ebene zueinander angeordneten Vermessungseinrichtungen (1, 2), die zur Vermessung und Krümmungserkennung des Rundholzes (3) in dessen Längsrichtung relativ dazu verfahrbar sind, ohne daß das Rundholz (3) vom Querförderer (4) abzuheben ist, **dadurch gekennzeichnet, daß** der Querförderer (4) zur automatischen Überführung des Rundholzes (3) in eine Lage, in der die Krümmungsebene des Rundholzes (3) eine horizontale Lage einnimmt, einen Abschnitt aufweist, in dem das Rundholz (3) nach oben förderbar ist, an welchen Abschnitt sich ein gebogener Teil anschließt, der in die horizontale Auflagefläche des Querförderers (4) mündet.

2. Vorrichtung nach Anspruch 1, **dadurch gekennzeichnet, daß** die beiden Vermessungseinrichtungen (1, 2) an einem Meßrahmen angeordnet sind, der auf dem Unterbau des Querförderers (4) fahrbar gelagert ist.

## Claims

1. Apparatus for non-contact measuring and identifying the curvature of round wood for the automatic classification of round wood, comprising a cross conveyor (4) and two measuring devices (1, 2), which are disposed crosswise on a plane one relative to the other and which, for measuring and identifying the curvature of the round wood (3), are displaceable in the latter's longitudinal direction and in relation thereto without the round wood (3) having to be lifted off the cross conveyor (4), characterized in that, for the automatic transfer of the round wood (3) into a position in which the plane of curvature of the round wood (3) takes a horizontal position, the cross conveyor (4) has a section on which the round wood (3) can be conveyed upwards and which is followed by a bent portion that discharges into the horizontal bearing surface of the cross conveyor (4).

2. Apparatus according to claim 1, characterized in that the two measuring devices (1, 2) are disposed on a measuring frame which lodges movably on the base of the cross conveyor (4).

## Revendications

1. Dispositif pour mesurer sans contact et identifier la courbure de bois rond pour le classement automatique de bois rond, comportant une bande transversale (4) et deux dispositifs de mesurage (1, 2) arrangés, l'un par rapport à l'autre, en croix sur un plan et déplaçables en sens longitudinal du bois rond (3) par rapport à celui-ci pour en mesurer et identifier la courbure sans que le bois rond (3) doive être relevé de la bande transversale (4), caractérisé en ce que, pour le transfert automatique du bois rond (3) à une position dans laquelle le plan de courbure du bois rond (3) prend une position horizontale, la bande transversale (4) présente une section sur laquelle le bois rond (3) est transportable en haut, section qui est suivie d'une partie coudée qui débouche dans la surface portante de la bande transversale (4).

2. Dispositif selon la revendication 1, caractérisé en ce que les deux dispositifs de mesurage (1, 2) sont arrangés sur un cadre de mesure qui loge de façon mobile sur la base de la bande transversale (4).
